# EUROPEAN PATENT SPECIFICATION

(11) **EP 3 789 196 B1**
(45) Date of publication and mention of the grant of the patent: **26.07.2023**
(21) Application number: 20194617.5
(22) Date of filing: 04.09.2020
(51) Int. Cl.: F28D 20/00

(54) **A THERMAL ENERGY STORAGE PLANT**
WÄRMEENERGIESPEICHERANLAGE
INSTALLATION DE STOCKAGE D'ÉNERGIE THERMIQUE

(30) Priority: 09.09.2019 DK PA201970563
(43) Date of publication of application: 10.03.2021
(73) Proprietor: Aalborg CSP A/S, 9000 Aalborg (DK); RK Projektentwicklungs- und Beteiligungs GmbH, 9020 Klagenfurt am Wörthersee (AT)
(72) Inventor: BOBACH, Morten Vang, 9000 Aalborg (DK)
(74) Representative: AWA Denmark A/S

(56) References cited:
- CN-A- 108 458 617
- DE-A1- 2 657 244
- FR-A1- 2 465 946
- US-A- 5 555 877

## Description

### Field of the Disclosure

The present disclosure relates to a thermal energy storage plant for storing thermal energy.

### Background

Storage of thermal energy is a topic of growing importance around the world, as it may provide a significant part of the solution to meeting increasingly stringent emission regulations in the field of energy supply. With ever rising fossil fuel prices, storage of thermal energy has the potential to be a more cost effective solution to meeting energy demands.

Traditional thermal energy storage plants typically make use of very large vessels made of metal or concrete filled with water to store thermal energy captured by thermal collectors. Other approaches involve excavating very large pits in the ground, which may be covered with a liner before they are filled with water, which in turn is used to store thermal energy from a thermal energy source. These thermal energy storage pits rely on a surface cover to insulate and prevent thermal energy from escaping from the otherwise open top surface of the pit.

Such thermal energy storage pits may be associated with drawbacks, including the surface cover being prone to leaking and having an unsatisfactory service life, which may reduce the effectiveness of the system.

Another issue is that the surface cover may be damaged due to the stresses and forces imposed on it as a result of water in the pit expanding or evaporating.

Furthermore, it may be difficult to determine the location and cause of a leak. This may be particularly difficult when water has entered into the surface cover. Further still, the liner separating the water from the ground surrounding the storage pit may also leak, resulting in heated water from the pit escaping into the surrounding ground. As the size of the thermal energy storage pits increase, so does the significance of the potential drawbacks.

DE 26 57 244 A1, on which the preamble of claim 1 is based, discloses a large water reservoir formed in a lake to hold hot water between its production by the cooling system of a power station and its use by a district heating network. The water enters and leaves by pipes. The surface is covered by a floating lid of thermally insulating plastic material. A pump submersed in the reservoir lifts water through an opening in the lid so that it flows over the top of the lid and returns by gravity through further openings in the lid. The water absorbs solar radiation as a supplementary heating source while flowing over the lid. An outer cover held above the lid by supports reduces heat loss by convection and radiation to the atmos.

US 5,555,877 discloses a cover for withstanding stormy weather and increasing solar heating of a body of water is disposed over the surface of the water. The cover is more transparent to visible radiation from the sun than to infrared radiation and is anchored and sealed around its periphery over the surface of the body of water. Means are provided for reducing the pressure between the bottom of the cover and the top of the water to sub-atmospheric, and for flooding the top surface of the cover with a layer of water and draining the layer of water from the top of the cover.

On this background an object of the disclosure is to improve on and/or solve one or more of these issues.

According to a first aspect of this disclosure, this and/or other objects are met by a thermal energy storage plant for storing thermal energy from an energy source, the storage plant comprising:
a liquid reservoir for being coupled to an energy source and comprising a reservoir volume with a top side, said top side coinciding with a liquid level of a thermal energy storage liquid in the liquid reservoir, and
a surface cover comprising an insulating material, such as extruded polystyrene (XPS), for retaining heat energy stored in said liquid, said surface cover at least partly covering said top side, said surface cover being divided into at least a first and a second surface cover segment positioned adjacently to each other and each comprising a circumferential periphery,
   **characterized** in that the first surface cover segment further comprises a first tilting device, a weight of the first tilting device tilting a draining surface of the first surface cover segment from its circumferential periphery downwards towards a first draining location of the first surface cover segment, whereby water from precipitate falling on the first surface cover segment will flow by gravity towards the first draining location where it can be drained off from the first surface cover segment,
the second surface cover segment similarly further comprises a second tilting device, a weight of the second tilting device tilting a draining surface of the second surface cover segment from its circumferential periphery downwards towards a second draining location of the second surface cover segment, whereby water from precipitate falling on the second surface cover segment will flow by gravity towards the second draining location where it can be drained off from the second surface cover segment, and
wherein the weight of the tilting device increases from a respective circumferential periphery towards the respective draining location of the first and/or second surface cover segment.

A "tilting device" according to the present disclosure, may be of any suitable material and may comprise one or more tilting device parts or objects e.g. a plurality of weights, individual particulates of a particulate tilting device which may also be denoted individual grains of a granular tilting device.

The first and the second tilting device may be substantially identical.

A tilting device may be provided above, in, or below a surface cover segment. The tilting device may be provided at and/or on portions of a surface cover surface segment. A tilting device my at least partly cover a surface cover segment. A tilting device may substantially cover an entire surface cover segment.

The increase in weight may be a stepped, or continuous, such as linear, or curved, or arced, increase in weight of the tilting device towards the draining location. The stepped increase in weight of the tilting device may be provided in steps of predetermined increments at predetermined portions of a surface cover segment so as to provide a desired tilting of a draining surface.

This may provide a surface cover with the tilting desired and ensure tilting of an entire draining surface.

"Draining location" according to the present disclosure may be understood as a location that facilitates draining of a liquid.

"Drained off from the first surface cover segment" may be achieved by including a draining opening, a well, a pump, a draining system, pipes etc. at or connected to a draining location. "Drained off from the second cover segment" may be achieved in similar fashion.

The draining location may be provided substantially at a centre or mid-point of the respective surface cover segment. The draining location may be located equidistantly from a circumferential periphery thereof. The draining location of a surface cover segment may be a portion of a surface cover segment that is offset in a height direction from the circumferential periphery of the respective surface cover segment.

A draining surface may be an outer surface of the surface cover and/or a surface in the surface cover.

A draining liner may be provided above or below a tilting device. The draining liner may comprise a draining surface. "Draining liner" according to the present disclosure, may be a liner that facilitates draining of a liquid. The draining liner may be substantially fluid tight and/or substantially liquid tight.

Tilting of the respective surface cover segments towards respective draining locations thereof may have the effect that liquid e.g. water from precipitation on a surface cover segment will flow towards the respective draining location of that surface cover segment due to gravity. In this way, liquid in or on a first surface cover segment may be kept separate from liquid in or on a second surface cover segment. Thereby, the surface cover segments may be individually drained off.

The term "tilting" may be defined as a surface cover segment being slanted or inclined such that there is an offset in a height direction, between a circumferential periphery of the surface cover segment and a draining location thereof.

"Tilted" may be understood as being tilted or inclined relative to horizontal. A height direction may extend vertically.

The storage plant may be in an installed position. The circumferential peripheries of one or more or all surface cover segments may extend substantially horizontally and/or may be provided at substantially the same vertical height.

The surface cover may extend in a width, length, and a height direction.

Additionally or alternatively, "tilting" may be defined as a draining surface of a surface cover segment being ramped or sloped towards a draining location thereof. The tilting of a drainage surface may be continuous e.g. linear. Additionally or alternatively, "tilting" may be defined as a draining surface of a surface cover segment having a negative gradient from a periphery thereof towards a draining location thereof.

The gradient may be in the range of -1:200 - -1:10, -1:150 - -1:10, - 1:100 - -1:10, or -1:50 - -1:10 vertical change:horizontal change from a circumferential periphery of a surface cover segment downwards towards a draining location thereof. The term "gradient" may alternatively be denoted "slope".

The draining surface of the first and/or second surface cover segment may be angled downwards from the horizontal towards a draining location of the respective surface cover segment at an angle between 0<90°, 0<75°, 0<60°, 0<45°, 0<30°, 0<15° or 0.1-10°.

One or more tilting devices may similarly be tilting downwards towards a respective draining location of a surface cover segment. The tilting device may be tilting with a gradient that is different from the gradient of the respective surface cover segment. The tilting device may be tilting with a gradient that is lower than the gradient of the respective surface cover segment. The tilting device may be tilting with a gradient that is higher than the gradient of the respective surface cover segment. The tilting device may be tilting at a gradient of between -1:10 - -1:500, -1:100 - -1:500, -1:200 - -1:500, -1:300 - - 1:500-, or 1:400 - -1:500 vertical change- horizontal change.

One or more tilting devices may be angled downwards from the horizontal towards a draining location of the respective surface cover segment at an angle between 0<90°, 0<75°, 0<60°, 0<45°, 0<30°, 0<15° or 0.1-10°.

The tilting device tilting with a different gradient than the respective surface cover segment may provide good pass-through of liquid, such as from precipitate such as rain falling on the surface cover, through the tilting device. It may also provide a good surface for walking on the surface cover e.g. during installation or a potential maintenance thereof.

The liquid reservoir may have a reservoir volume of at least 50,000 m³, 100,000 m³, 250,000 m³, 500,000 m³, 1,000,000 m³, 2,000,000 m³, 4,000,000 m³, or even larger.

The liquid reservoir may be embedded in a depression so as to provide the top side and to be substantially surrounded by earth material on a number of remaining sides of the liquid reservoir. The top side may have an area extent of at least 10,000 m², 50,000 m², 100,000 m², 150,000 m², or larger.

The liquid reservoir may comprise a liner substantially covering said remaining sides for substantially separating liquid in the liquid reservoir from said surrounding earth materials.

The term "thermal energy source" may be understood as solar energy, geothermal energy, incinerators, heat exchangers etc. The thermal energy source may also be thermal energy produced from power or excess power produced from wind turbines, solar collectors, waste incinerators and other power plants such as used in district heating or electricity generation. It may also be heat captured from buildings, server stations, cooling water from power stations etc. and/or power generation in general.

The thermal storage liquid may be any liquid suitable for storing thermal energy. The thermal storage liquid may be or comprise or essentially consist of water.

The surface cover may comprise at least one layer of solid insulating material. The surface cover may essentially cover said top side of the liquid reservoir.

The surface cover may comprise one or more insulating layers. The one or more insulating layers may comprise or substantially consist of or consist of insulating materials such as mineral wool, polyethylene (PE), such as expanded polyethylene (EPE) or Expanded polyethylene copolymers (EPC) and/or polystyrene (PS), such as extruded polystyrene (XPS), polyisocyanurate, stone wool, fiberglass, natural fibres, perlite, polymers, elastomers and/or combinations thereof.

The surface cover may comprise two or more layers of insulating material.

A layer of insulating material located closest to the top side may be of a higher density than the other layer(s) of insulating material.

This may have the advantage of stabilizing the surface cover both in use and during manufacture. This may have the further advantage of improving the ease of maintenance of the surface cover, e.g. when walking on the cover.

The surface cover may be floating on a liquid level surface of the liquid in the liquid reservoir.

The division of the surface cover into individual cover segments may have the effect reducing the height difference that is created by the weight of liquid, such as precipitation falling on the surface cover, weighing the surface cover down. For surface covers comprising just a single segment, the liquid gathering on the surface cover may flow and collect at a single location on the surface cover i.e. the weight of substantially all or all of the precipitation may collect at a single location on the surface cover. This may cause the single location of the surface cover to be pushed down under the weight of the liquid forming a depression in the surface cover and thereby creating a large height difference between the depression and the rest of the surface cover. This may put stress and tension on the surface cover. The division of the surface cover into individual surface cover segments may create several locations on the surface cover for the liquid to flow to and collect. This may mean less liquid collecting, and so less weight collecting, at each location and therefore a smaller height difference between a depression and peaks of the surface cover may be created by the weight of the liquid weighing the surface cover down. This may have the effect of reducing the stress on the surface cover.

A further effect of this may be that as less liquid may collect at each location, smaller pumps may be used to pump away the liquid. This may be further advantageous in really heavy rain showers as water may be pumped away from several different locations which may be more effective than pumping away liquid weighing down the surface cover segment from a single location. By utilising several smaller pumps, it may also be possible to provide a greater pumping capacity. This may provide security as water may be effectively pumped away from the surface cover even during heavy rain showers.

The division of the surface cover into cover segments may have the effect of enabling the location of a potential leak to be narrowed down to a single segment of the surface cover. This may improve the ease with which a location of a leak may be determined, as a much smaller area has to be analysed. It may have the further effect that a leak in the surface cover may be contained within the segment where the leak occurred.

The division of the surface cover into cover segments may have the further effect that maintenance of the surface cover is improved, as individual segments may be maintained separately without impacting other cover segments e.g. when fixing a leak.

The division of the surface cover into surface cover segments may also have the effect that replacement of the surface cover is improved as a single cover segment may be replaced separately from the surface cover as opposed to replacing the entire surface cover. This may have the further effect that the efficiency of the thermal energy storage plant is improved during maintenance or replacement as only a segment of the surface cover has to be removed, leaving the remaining surface cover intact, and so the liquid reservoir will be better insulated than if the entire surface cover had to be removed.

The division of the surface cover into surface cover segments may also improve the ease of transport of the surface cover to the site, as it may be transported in separate segments. The surface cover may then be assembled on site.

The division of the surface cover into surface cover segments may have the effect that the durability and strength of the surface cover is improved as it is better able to withstand thermal expansions and contractions. A further effect may be that air under the surface cover may be transported to ventilation vents or valves.

Two, or three, or four or more, or all of the surface cover segments may be substantially of same size and shape, and/or substantially identical.

Each surface cover segment may have a top surface area extent of at least 1/8, 1/10, 1/16, 1/25, 1/32, 1/40, or 1/50 of said area extent of said top surface.

The surface cover segments may be plate-shaped.

The surface cover segments may be provided as separate modules, which may be attached to each other during assembly of the storage plant.

A "thermal energy storage plant" may be a thermal energy storage plant such as a thermal storage sink pond.

The term "solid" may potentially be understood as non-fluid.

The term "drained off" may potentially be understood as "being caused to leave the surface of something".

The term "individually" may alternatively be denoted or include "independently" and/or "separately".

The first and/or second tilting device may comprise(s) or consist(s) or substantially consist(s) of granular matter.

The term "granular" in the present disclosure may alternatively be denoted "particulate".

The granular matter may comprise or substantially consist or consist of gravel, pebbles, beads and/or stones.

The granular matter may be chosen from the group consisting of coarse gravel, medium gravel, fine gravel, coarse sand, medium sand, and/or fine sand, according to ISO 14688-1:2002, or combinations thereof.

This has been found to provide good distribution of the tilting device and allow liquid, such as water from precipitation falling on the surface cover, to pass through the tilting device well.

A layer thickness of one or more of the tilting devices may increase from the circumferential periphery of the respective surface cover segment towards the respective draining location thereof.

A layer thickness may substantially extend or extend in a direction perpendicular to a top surface of a surface cover segment. The layer thickness may extend in the height direction. The layer thickness may be in a range of 1-500 mm, 1-400 mm, 1-300 mm, 1-200 mm, 1-100 mm, 1-50 mm, or 1-30 mm. The layer thickness of the tilting device may be at least 10 mm greater at a draining location of a respective surface cover than at a circumferential periphery thereof.

In an embodiment the layer thickness may be 30 mm at the circumferential periphery of a surface cover segment and the layer thickness may be 145 mm at the draining location of a surface cover segment. The layer thickness may increase in a stepped fashion, or continuously, such as linearly, from the circumferential periphery to the draining location of a surface cover segment towards a draining location thereof.

A small layer thickness may save material and costs associated with production of the surface cover. A small layer thickness may also reduce the strength requirements of the surface cover, which in turn may reduce the amount of material required to produce the surface cover, which in turn may further reduce the cost associated with production of the surface cover.

Additionally or alternatively, a tilting device may be provided on a surface cover segment according to mass per unit area. A tilting device may be provided at a circumferential periphery of a surface cover segment in the range of 1-500 kg/m². A tilting device may be provided at a circumferential periphery of a surface cover segment in the range of 1-100 kg/m², 1-80 kg/m², 1-60 kg/m², 1-40 kg/m², 1-20 kg/m², or 1-10 kg/m². A tilting device may be provided at a draining location of a surface cover segment in the range of 1-500 kg/m², 100-500 kg/m², 200-500 kg/m², 300-500 kg/m2 or 400-500 kg/m². The tilting device may be provided at a draining location in an amount at least 10 kg/m² greater than at the circumferential periphery of the respective surface cover segment.

In an embodiment, the tilting device is provided at a periphery of a surface cover segment in the amount of 46.5 kg/m² and in the amount of 226 kg/m² at the draining location thereof.

This has been found to provide an optimum tilting of the surface cover segments and a good pass-through of liquid, such as water from precipitation falling on the surface cover, through the tilting device.

The first and/or second surface cover segment may comprise(s) at least one tilting device container for containing at least one of the first or second tilting devices respectively.

The at least one tilting device containers may cover a predetermined portion of a respective surface cover segment. The at least one tilting device container may be of a predetermined height corresponding to a desired layer thickness of a tilting device. The at least one tilting device container may comprise a marking corresponding to a desired layer thickness of tilting device. The at least one tilting device container may be a compartment integrally formed or in one piece with a surface cover segment. The desired layer thickness may be a desired layer thickness at a predetermined portion of a surface cover segment.

The at least one tilting device container may be of different heights. The at least one tilting device container may cover a predetermined portion of a surface cover segment. Tilting device container of different heights may cover different predetermined portions of a surface cover segment. The respective height of each of the at least one tilting device container may correspond to the desired layer thickness at a given portion of a surface cover segment that the respective tilting device container covers. The at least one tilting device container may comprise markings at different heights corresponding to a desired thickness layer of the tilting device at the respective portion of the surface cover segment.

In this way, the layer thickness of the tilting device may be easily controlled. It may also be possible to quickly determine that a correct layer thickness of tilting device has been provided at a given portion of a surface cover segment by determining if a tilting device container has been filled either fully or to a desired height defined by a marking.

The tilting device may have a density that is higher than the density of the thermal energy storage liquid.

A density of at least one of the tilting devices may increase from the circumferential periphery of a surface cover segment towards a draining location thereof. The increase in density may be a stepped, or continuous, such as linear or curved or arced, increase in density of the tilting device towards the draining location. The stepped increase in density of the tilting device may be provided in steps of predetermined increments at predetermined portions of a surface cover segment so as to provide a desired tilting of a draining surface.

The first of the surface cover segments may comprise a draining system, which is isolated from a draining system of the second of the surface cover segments so that liquid on a surface of each of and/or in each of said first and second cover segments can be individually drained off at the first or second draining location respectively.

Each draining systems may be located at a draining location of a surface cover segment. Each draining system may extend below the surface cover and/or a bottom of the surface cover and/or a bottom liner of the surface cover. The draining systems may extend below the top side of the liquid reservoir.

Each surface cover segment may comprise a substantially fluid tight and/or substantially liquid tight barrier at a periphery thereof. The draining systems may be isolated from each other by means of a substantially fluid tight and/or substantially liquid tight barrier.

Each surface cover segment may comprise drain channels in the surface cover. The drain channels may be provided between layers of the surface cover material. Additionally or alternatively, the drain channels may be in the form of pipes. The pipes may be made from a material chosen from the following group: polymers, ceramics, metals or combinations thereof. The drain channels may channel liquid into a well. The drain channel may comprise a one-way valve preventing water from flowing from a well into said drain channel.

Each draining system may be a draining system draining liquid upstream of an outlet of the respective segment. This may have the effect of improving the locating of a leak in the surface cover. This may be achieved by determining that a draining system is draining more liquid than another draining system.

The liquid on or in each surface cover segment that can be drained individually may be precipitate and/or condensed liquid inside a segment and/or storage liquid, which may have entered into a segment from a leak, or the like, in the segment.

Each surface cover segment may comprise a grating for preventing the tilting device or contaminants, such as plant litter etc. from entering the draining system. The grating may comprise openings of a size that is smaller than the grain size of one or more of the tilting devices.

Each surface cover segment may comprise at least one well. A first well may be for liquid drained off from an outer surface of the surface cover and the second well may be for liquid drained off from inside the surface cover. This may allow liquid from external sources such as precipitation, to be drained separately and may also allow liquid stemming from the liquid reservoir to be drained separately. This may prevent contamination of the liquid reservoir and may also the separately drained liquids to be treated separately according to the best practice.

At least the first and second surface cover segment may each comprise at least one well located at the respective draining location thereof, for collecting liquid drained off of the respective surface cover segment.

A well may extend below the top side and comprise a liquid extraction point or liquid outlet positioned below the top side. A well may be located on top of a bottom liner.

A well may be located below a top surface of a surface cover segment. The well may extend below the surface cover. Each well may comprise a pump unit for extracting the water.

At least one well may comprise at least one filter unit.

The term "well" may be understood as a shaft for collecting fluid. Additionally, or alternatively, it may be understood as a depression to hold liquid. Additionally, or alternatively, it may be understood as a depression made to hold liquid extending below a surface.

The liquid outlets and/or drainage channels may be covered by a liner and/or insulating material. The liquid outlets and/or drainage channels may be arranged at least partly inside said surface cover.

The well may comprise a tilting device or a compartment for a tilting device.

The surface cover and/or surface cover segments may comprise a bottom and/or top liner. The bottom liner may constitute the bottom of the surface cover and/or surface cover segment. The top liner may be continuous and substantially cover the entire top side of the liquid reservoir.

The surface cover and/or said bottom liner may substantially cover the entire top side of the liquid reservoir. Similarly, the top liner may substantially cover the entire top side of the liquid reservoir.

An advantage of this may be good insulation across substantially the entire top side of the liquid reservoir.

The liners may be continuous or may comprise two or more elements attached together to form a continuous liner. One or more of the liners may comprise openings to accommodate a barrier. One or more of the liners may be continuous or comprise two or more elements over a segment of the surface cover. One or more of the liners may be a liner comprising two or more liner elements attached together. The liner elements of the top or bottom liner may be attached by welding, gluing, sewing, riveting, zippers, one or more overlapping flaps of material or a combination thereof. The one or more liner elements may be overlapping at a periphery of respective surface cover segments. One or more of the liners may be substantially liquid tight. Additionally or alternatively, one or more of the liners may be substantially vapour tight. One or more of the liners may be in the form of a one-way liquid and/or vapour membrane. One or more of the liners may comprise and/or be in the form of a diffusion membrane. One or more of the liners may be diffusion-open. One or more of the liners may be diffusion tight. The liners may comprise a draining surface. The liners may constitute a draining liner.

The surface cover may comprise a substantially liquid tight and substantially diffusion tight, continuous bottom liner for facing the storage liquid, the bottom liner at least partly covering said top side, and a substantially diffusion-open top liner, where one or more layers of insulating material is provided between the top and bottom liner.

This may have the advantage that liquid and/or vapour will not enter the surface cover through its bottom liner and that any liquid or vapour in the surface cover may escape out of the surface cover by diffusion through the top liner. This may further provide good insulating properties as liquid or vapour. It may further provide good durability as

"Continuous" in the present disclosure may be defined as the liner not being interrupted and/or being in on piece.

The diffusion membrane may have the effect of allowing air and/or vapour in and/or below the surface cover to vent to the atmosphere.

The term "diffusion-open" may be understood as surface or liner that allows diffusion of air and/or vapour through the surface or liner.

The term "diffusion tight" may be understood as a surface or liner that does not allow diffusion of air and/or vapour through the surface.

The liners may be made from a material chosen from the following group of materials: HDPE, PE, EPDM, polymeric geomembranes, polymers, elastomers and combinations thereof.

A substantially fluid tight and/or substantially liquid tight barrier may be attached to a bottom liner and/or top liner, for isolating a draining system of the first cover segment from a draining system of the second of the surface cover segments so that liquid on a surface of each of and/or in each of said first and second cover segments can be individually drained off at the first or second draining location respectively. The barrier may be attached at least to a bottom liner of the surface cover. The barrier may be attached at a periphery of a surface cover segment.

Additionally or alternatively, one or more barriers may be attached to a bottom liner of the surface cover. A layer of insulating material may be placed and/or attached to the bottom liner and or to the barriers, above the bottom liner. A top liner may be placed and/or attached to an insulating layer and/or to the barriers, above the insulating layer. The barrier may be an integral part of the bottom liner.

The term "integral" may be understood as the barrier being integral or in one piece with the bottom liner. That is at least a part of the barrier may be part of the bottom liner.

Additionally or alternatively, the surface cover segments may comprise interconnecting portions for connecting to a barrier. The interconnecting portion may be in the form of a flap, cut-out or the like. The flap may comprise one or more strips of material. Attachment of the surface cover section to said interconnecting portion may be through welding, gluing, sewing, riveting, zippers, one or more overlapping flaps of material or a combination thereof.

In an embodiment said barrier is provided by a barrier element interposed between said insulating material of each of the first and second surface cover segments.

The barrier element may be provided potentially so as to assist in the positioning of said insulating material and/or tilting device adjacent said barrier element, and/or potentially so that at least one of said surface cover segment can be removed from said surface cover to allow individual maintenance or replacement of said at least one surface cover segment.

The phrase "assist in the positioning" may be understood as the barrier elements acting as a guide for the insulating material and/or tilting device and/or provide an attachment point for the insulating material. One or more of the barrier elements may comprise a sloped surface relative to the surface cover or a liquid level or liquid top surface, in so providing a funnel effect aiding the positioning of the insulating material and/or tilting device. Additionally or alternatively, at least one side surface of at least one barrier element facing one of said surface cover segments may be sloped relative to said liquid level of the thermal energy storage liquid in the liquid reservoir, so that at least one of said barrier elements assists in the positioning of said surface cover segments adjacently.

The barrier elements may be trapezoidal, triangular, semi-spherical, curved etc. Similarly, the barrier elements may assist in the positioning of the surface cover segments during manufacture of the surface cover or the like. The barrier elements should preferably be able to withstand the pressure from liquid collected in adjacent segments of the surface cover.

The surface cover may extend in a range of 100-600 m in a length direction and in a range of 100-600 m in a width direction.

A surface cover segment may extend in a range of 10-100 m in a length direction and in a range of 10-100 m in a width direction.

Additionally or alternatively, the surface cover segments may be 10, 20, 30, 40, 50, 60, 70, 80, 90, or 100 m long and 10, 20, 30, 40, 50, 60, 70, 80, 90, 100 m wide and/or any combination thereof.

The surface cover may comprise at least one vent for allowing air and/or vapour from below the surface cover to be vented to above the surface cover. Additionally or alternatively, the vent may vent vapour from inside the surface cover to above the surface cover. The vent may further comprise one or more valves. The one or more valves may be in the form of a control and/or one-way valve. The vent may also extend through the surface cover from the bottom of the surface cover to the top of the surface cover. The vent may extend from a bottom liner to a top liner. It may extend through the insulating material. This may have the effect that air and/or vapour below the surface cover or inside the surface cover may be vented to above the surface cover.

The barrier elements may comprise a vent.

A person skilled in the art will appreciate that any one or more of the above aspects of this disclosure and embodiments thereof may be combined with any one or more of the other aspects of the disclosure and embodiments thereof.

### Brief description of drawings

The thermal energy storage plant will now be described in greater detail based on non-limiting exemplary embodiments and with reference to the drawings, on which:
FIG. 1 is a top-down view of a first embodiment of a thermal energy storage plant according to this disclosure,
FIG. 2a is a cross-sectional view of a part of the thermal storage plant in FIG. 1,
FIG. 2b is a cross-sectional view of a part of a second embodiment of a thermal storage plant according to this disclosure, and
FIG. 2c is a cross-sectional view of a part of a third embodiment of a thermal storage plant according to this disclosure.

### Detailed description

When planning a location for a thermal energy storage plant there are several important factors, such as the proximity to the energy consumer, the type of soil (particularly in regard to the geotechnical stability and thermal properties) and the cost of the land. A plant like this may be connected to an array of solar thermal collectors and used to feed into a district heating system. Abandoned gravel pits are often used.

Once a location has been chosen the liquid reservoir for storage of the thermal liquid is excavated. A series of outlet and inlet pipes at different depths may be installed to allow both the extraction and resupply of liquid at the depth with the optimum temperature in the reservoir. The extracted liquid is typically transferred to a district heating plant where a heat exchanger is deployed to extract the heat from the thermal storage liquid in order to keep the thermal storage liquid of the thermal energy storage plant separate from that of a district heating system.

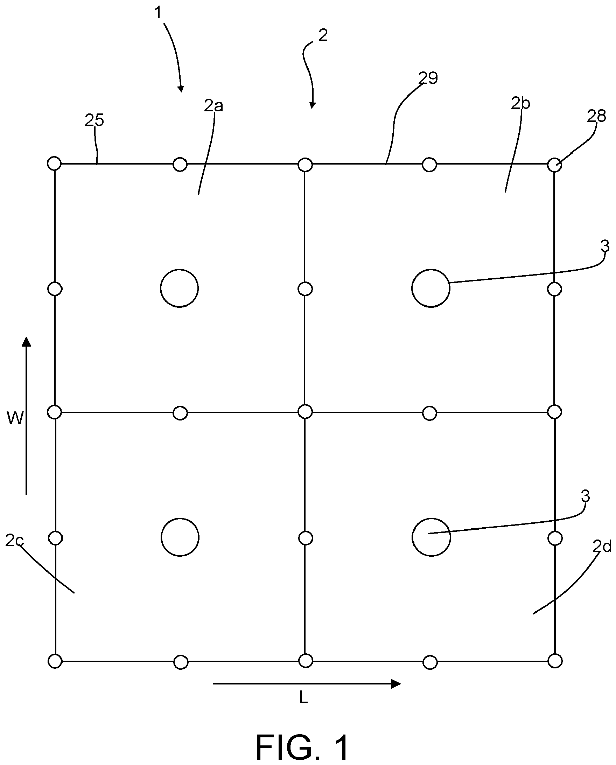

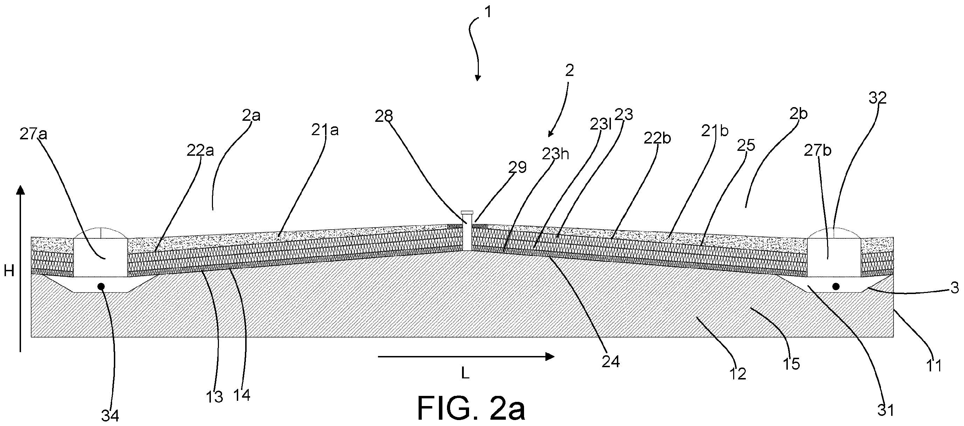

Referring first to FIG. 1, a thermal energy storage plant 1 is shown from a top-down view. The thermal energy storage plant 1 stores thermal energy from an energy source, in this case from solar thermal collectors and surplus energy from power stations. As seen in FIG. 2a, the storage plant comprises a liquid reservoir 11 which is coupled to the energy source (not shown) as well as a reservoir volume 12 with a top side 13, which coincides with a liquid level 14 of a thermal energy storage liquid 15 in the liquid reservoir 11.

The liquid reservoir has a reservoir volume of 1,800,000 m³ and is embedded in a depression so as to provide the top side and to be substantially surrounded by earth material on a number of remaining sides of the liquid reservoir. The top side has an area extent of at least 90,000 m² and comprises a liner substantially covering the remaining sides for substantially separating liquid in the liquid reservoir from said surrounding earth materials.

The storage plant 1 further has a surface cover 2 which substantially covers the entire top side, and comprises an insulating material 23 in the form of extruded polystyrene (XPS), for retaining thermal energy stored in said liquid 15, said surface cover covers the top side and is floating on the liquid level 14 surface of the liquid in the liquid reservoir.

The surface cover 2 comprises a substantially liquid tight and substantially diffusion tight, continuous bottom liner 24 covering the top side 13, and a continuous top liner 25, and three layers of insulating material 23, 23l, 23h provided between the top and bottom liner. The insulating layer 23h located closest to the top side 13 is of a higher density than the other layers of insulating material. Insulating 23h is of a high density expanded polyethylene, 23l is of a low density expanded polyethylene and layer 23 is of a polystyrene The continuous bottom liner constitutes the bottom of the surface cover.

The liners are made from a combination of HDPE, PE, EPDM, polymeric geomembranes polymers and elastomers.

The surface cover is divided into a first 2a, second 2b, third 2c and fourth 4d surface cover segment positioned adjacently to each other and each comprising a circumferential periphery 29. The first surface cover segment 2a further comprises a first tilting device 21a, a weight of which tilts a draining surface 22a of the first surface cover segment from its circumferential periphery downwards towards a first draining location 27a of the first surface cover segment, whereby water from precipitate falling on the first surface cover segment will flow by gravity towards the first draining location where it can be drained off from the first surface cover segment.

The second surface cover segment 2b similarly comprises a second tilting device 21b, a weight of which tilts a draining surface 22b of the second surface cover segment from its circumferential periphery 29 downwards towards a second draining location 27b of the second surface cover segment, whereby water from precipitate falling on the second surface cover segment will flow by gravity towards the second draining location where it can be drained off from the second surface cover segment.

The tilting devices 21a, 21b are provided above the surface cover segments and substantially cover the entire surface cover segments. The draining locations 27a, 27b are provided substantially at the centre of the respective surface cover segments and equidistantly from the circumferential peripheries thereof. The draining locations are offset in the height direction from the circumferential periphery of the respective surface cover segments.

The tilting of the drainage surfaces is continuous and linear with a gradient of -1:100 vertical change:horizontal change from the circumferential periphery of the respective surface cover segment downwards towards the draining location thereof. Similarly, the tilting devices 21a, 21b are tilting with a gradient of -1:290 from the circumferential periphery of the respective surface cover segment downwards towards the draining location thereof.

The surface cover segments are substantially of the same size and shape and cover 1/10 of the area extent of the top side and are 30 m long and 30 m wide.

The weight of the tilting devices 21a, 21b which substantially consist of granular matter in the form of medium gravel according to ISO 14688-1:2002, increases continuously, and in a linear fashion, from the respective circumferential periphery 29 towards the respective draining location of the first and second surface cover segment.

The layer thickness of the tilting devices also increases from the circumferential periphery of the respective surface cover segments towards the respective draining locations thereof. The layer thickness of the tilting devices at the circumferential periphery and at the draining locations of the respective surface cover segments is 30 mm and 145 mm respectively. The tilting devices could also be provided according to weight per unit area e.g. 46.5 kg/m² at the circumferential periphery of a surface cover segment increasing linearly to 226 kg/m² at the draining location thereof.

The first surface cover segment 2a further comprises a draining system 3, which is isolated from a draining system 3 of the second surface cover segment 2b so that liquid on a surface of each and in each of said first and second cover segments can be individually drained off. The draining systems 3 are located at the draining location the respective surface cover segments. The draining systems further comprise drain channels (not shown) in the surface cover 2 and a grating 32 for preventing the tilting device 27a, 27b, or contaminants such as plant litter etc. from entering the draining system. The grating 32 comprises openings of a size that is smaller than the grain size of the tilting devices.

The first and second surface cover segment further comprise a well 32 located at the respective draining location thereof, for collecting liquid drained off of the respective surface cover segment. The wells extend below the top side and comprise a liquid extraction point 34 positioned below the top side. Each well comprises a pump unit (not shown) for extracting the water and a filter unit (not shown) for filtering the extracted water.

The surface cover further comprises several vents 28 for allowing air and vapour from below the surface cover 2 to be vented to above the surface cover. The vents extend through the surface cover from the bottom of the surface cover to the top of the surface cover and through the insulating material 23.

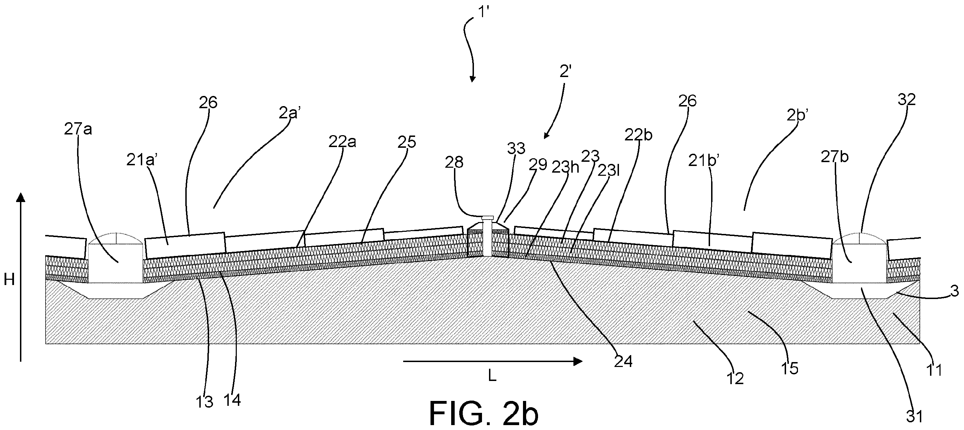

Referring now to FIG. 2b, a cross-sectional view of a part of a second embodiment of a thermal storage plant 1' according to this disclosure is shown. Reference signs for features which are similar or substantially the same as in the first embodiment, have been re-used.

The first 2a' and second 2b' surface cover segments of the second embodiment of the thermal storage plant comprise tilting device containers 26 for containing the first 21a' and second 21b' tilting devices respectively. The tilting device containers cover a predetermined portion of a respective surface cover segment and are of a predetermined height corresponding to a desired layer thickness of tilting device at the given portion of the respective surface cover segment. The tilting device containers comprise a marking (not shown) corresponding to the desired layer thickness of tilting device.

The weight of the tilting device 21a', 21 b' increases in a stepped fashion from the respective circumferential periphery 29 towards the respective draining location 27a, 27b of the first and second surface cover segment. The stepped increase in weight of the tilting device is provided in steps of predetermined increments at predetermined portions of a surface cover segment so providing the desired tilting of the draining surfaces 22a, 22b. The draining surface of the first and second surface cover segments are angled downwards from the horizontal towards the draining locations of the respective surface cover segment at an angle between 0.1-10°.

A substantially fluid and liquid tight trapezoidal barrier in the form of a barrier element 33 is attached to bottom liner 24 and interposed between said insulating material 23, 23l, 23h of each of the first and second surface cover segments at the circumferential periphery of the surface cover segments. The barrier 33 isolates the draining surfaces 22a, 22b and draining systems 3 from each other and extends above the top liner assisting in the positioning of the tilting device adjacent said barrier element. The barrier element further comprises the vent 28.

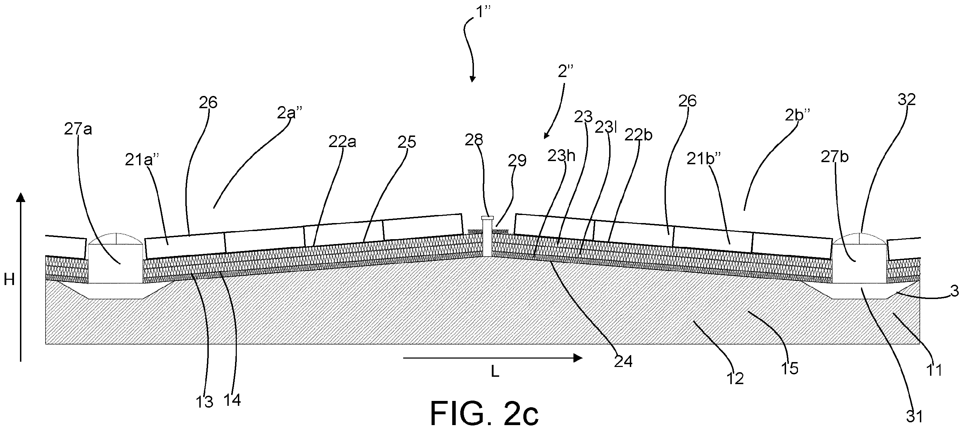

FIG. 2c shows a part of a third embodiment of a thermal storage plant 1" according to this disclosure. Reference signs for features which are similar or substantially the same as in the first and second embodiment, have been re-used. The third embodiment is different from the second embodiment in that the tilting device containers 26 of the first 21a" and second 21b" tilting devices are of the same height and are filled up to a marking (not shown) corresponding to a desired layer thickness of the respective tilting device. The markings of the tilting device containers are at different heights corresponding to the desired thickness layer of the tilting device at the respective portion of the surface cover segment 2a", 2b". The density of the respective tilting devices increases from the circumferential periphery of the surface cover segments 2a", 2b" towards a draining location 27a, 27b thereof. The increase in density is continuous and linear towards the respective draining locations. In this way the desired tilting of draining surfaces 22a, 22b is achieved.

Although described only in reference to part of a thermal energy storage plant, the above may equally apply to the remaining thermal energy storage plant, surface cover and surface cover segments.

### List of references

The following is a list of reference numerals used throughout this specification.
- 1: Thermal energy storage plant
- 1': Thermal energy storage plant
- 1": Thermal energy storage plant
- 11: Liquid reservoir
- 12: Reservoir volume
- 13: Top side
- 14: Liquid level
- 15: Thermal energy storage liquid
- 2: Surface cover
- 2': Surface cover
- 2": Surface cover
- 2a: First surface cover segment
- 2a': First surface cover segment
- 2a": First surface cover segment
- 2b: Second surface cover segment
- 2b': Second surface cover segment
- 2b": Second surface cover segment
- 21a: First tilting device
- 21a': First tilting device
- 21a": First tilting device
- 21b: Second tilting device
- 21b': Second tilting device
- 21b": Second tilting device
- 22a: Draining surface of the first surface cover segment
- 22b: Draining surface of the second surface cover segment
- 23: Insulating material
- 23h: High density insulating layer
- 24: Bottom liner
- 25: Top liner
- 26: Tilting device container
- 27a: First draining location
- 27b: Second draining location
- 28: Vent
- 29: Circumferential periphery
- 3: Draining system
- 31: Well
- 32: Grating
- 33: Barrier
- 34: Liquid extraction point
- H: Height direction
- L: Length direction
- W: Width direction

## Claims

1. A thermal energy storage plant (1, 1', 1") for storing thermal energy from an energy source, the storage plant (1, 1', 1") comprising:
a liquid reservoir (11) for being coupled to an energy source and comprising a reservoir volume (12) with a top side (13), said top side (13) coinciding with a liquid level (14) of a thermal energy storage liquid (15) in the liquid reservoir (11), and
a surface cover (2, 2', 2") comprising an insulating material (23), such as extruded polystyrene (XPS), for retaining heat energy stored in said liquid (15), said surface cover (2, 2', 2") at least partly covering said top side (13), said surface cover (2, 2', 2") being divided into at least a first and a second surface cover segment (2a, 2a', 2a", 2b, 2b', 2b") positioned adjacently to each other and each comprising a circumferential periphery (29),
**characterized in that** the first surface cover segment (2a, 2a', 2a") further comprises a first tilting device (21a, 21a', 21a"), a weight of the first tilting device (21a, 21a', 21a") tilting a draining surface (22a) of the first surface cover segment (2a, 2a', 2a") from its circumferential periphery (29) downwards towards a first draining location (27a) of the first surface cover segment (2a, 2a', 2a"), whereby water from precipitate falling on the first surface cover segment (2a, 2a', 2a") will flow by gravity towards the first draining location (27a) where it can be drained off from the first surface cover segment (2a, 2a', 2a"),
that the second surface cover segment (2b, 2b', 2b") similarly further comprises a second tilting device (21b, 21b', 21b"), a weight of the second tilting device (21b, 21b', 21b") tilting a draining surface (22b) of the second surface cover segment (2b, 2b', 2b") from its circumferential periphery (29) downwards towards a second draining location (27b) of the second surface cover segment (2b, 2b', 2b"), whereby water from precipitate falling on the second surface cover segment (2b, 2b', 2b") will flow by gravity towards the second draining location (27b) where it can be drained off from the second surface cover segment (2b, 2b', 2b"), and
wherein the weight of the tilting device (21a, 21a', 21a", 21b, 21b', 21b") increases from a respective circumferential periphery (29) towards the respective draining location (27a, 27b) of the first and/or second surface cover segment (2a, 2a', 2a", 2b, 2b', 2b").

2. A thermal energy storage plant (1, 1', 1") according to claim 1, wherein the first and/or second tilting device (21a, 21a', 21a", 21b, 21b', 21b") comprise(s) or consist(s) or substantially consist(s) of granular matter.

3. A thermal energy storage plant (1, 1', 1") according to any one of the preceding claims, wherein a layer thickness of one or more of the tilting devices (21a, 21a', 21a", 21b, 21b', 21b") increases from the circumferential periphery (29) of the respective surface cover segment (2a, 2a', 2a", 2b, 2b', 2b") towards the respective draining location (27a, 27b) thereof.

4. A thermal energy storage plant (1, 1', 1") according to any one of the preceding claims, wherein at least the first and/or second surface cover segment (2a, 2a', 2a", 2b, 2b', 2b") comprise(s) at least one tilting device container (26) for containing at least one of the first or second tilting devices (21a, 21a', 21a", 21b, 21b', 21b") respectively.

5. A thermal energy storage plant (1, 1', 1") according to any one of the preceding claims, wherein the surface cover (2, 2', 2") comprises a substantially liquid tight and substantially diffusion tight, continuous bottom liner (24) for facing the storage liquid (15), the bottom liner (24) at least partly covering said top side (13), and a substantially diffusion-open top liner (25), where one or more layers of insulating material (23) is provided between the top and bottom liner (24, 25).

6. A thermal energy storage plant (1, 1', 1") according to claim 6, wherein said surface cover (2, 2', 2") and said bottom liner (24) substantially cover the entire top side (13) of the liquid reservoir (11).

7. A thermal energy storage plant (1, 1', 1") according to claim 5 or 6, wherein the top liner (25) is continuous and substantially covers the entire top side (13) of the liquid reservoir (11).

8. The thermal energy storage plant (1, 1', 1") according to any one of the preceding claims, wherein the first of the surface cover segments (2a, 2a', 2a") comprises a draining system (3), which is isolated from a draining system (3) of the second of the surface cover segments (2b, 2b', 2b") so that liquid on a surface of each of and/or in each of said first and second cover segments (2a, 2a', 2a", 2b, 2b', 2b") can be individually drained off at the first or second draining location (27a, 27b) respectively.

9. A thermal energy storage plant (1, 1', 1") according to any of the preceding claims, wherein at least the first and second surface cover segment (2a, 2a', 2a", 2b, 2b', 2b") each comprise at least one well (31) located at the respective draining location (27a, 27b) thereof, for collecting liquid drained off of the respective surface cover segment (2a, 2a', 2a", 2b, 2b', 2b").

10. A thermal energy storage plant (1, 1', 1") according to claim 9, wherein the well (31) extends below the top side (13) and comprises a liquid extraction point (34) or liquid outlet positioned below the top side (13).

11. A thermal energy storage plant (1, 1', 1") according to any one of the preceding claims, wherein a substantially fluid tight and/or substantially liquid tight barrier (33) is attached to the bottom liner (24) and/or top liner (25), for isolating a draining system (3) of the first cover segment (2a, 2a', 2a") from a draining system (3) of the second of the surface cover segments (2b, 2b', 2b") so that liquid on a surface of each of and/or in each of said first and second cover segments (2a, 2a', 2a", 2b, 2b', 2b") can be individually drained off at the first or second draining location (27a, 27b) respectively.

12. A thermal energy storage plant (1, 1', 1") according to any of the preceding claims, wherein the surface cover (2a, 2a', 2a") comprises two or more layers of insulating material (23), and wherein the layer of insulating material located closest to the top side (13) is of a higher density than the other layer(s) of insulating material (23).

13. A thermal energy storage plant (1, 1', 1") according to any one of the preceding claims, wherein the surface cover (2, 2', 2") may extend in a range of 100-600 m in a length direction (L) and in a range of 100-600 m in a width direction (W).

14. A thermal energy storage plant (1, 1', 1") according to any one of the preceding claims, wherein a surface cover segment (2a, 2a', 2a", 2b, 2b', 2b") extends in a range of 10-100 m in a length direction (L) and in a range of 10-100 m in a width direction (W).

## Patentansprüche

1. Wärmeenergiespeicheranlage (1, 1', 1") zum Speichern von Wärmeenergie von einer Energiequelle, wobei die Speicheranlage (1, 1', 1") umfasst:
einen Flüssigkeitsbehälter (11) zur Kopplung an eine Energiequelle und umfassend ein Behältervolumen (12) mit einer Oberseite (13), wobei die Oberseite (13) mit einem Flüssigkeitsspiegel (14) einer Wärmeenergiespeicherflüssigkeit (15) im Flüssigkeitsbehälter (11) übereinstimmt, und
eine Oberflächenabdeckung (2, 2', 2"), die ein Isoliermaterial (23), beispielsweise extrudiertes Polystyrol (XPS), zum Zurückhalten der in der Flüssigkeit (15) gespeicherten Wärmeenergie umfasst, wobei die Oberflächenabdeckung (2, 2', 2") die Oberseite (13) zumindest teilweise abdeckt, und die Oberflächenabdeckung (2, 2', 2") in mindestens ein erstes und ein zweites Oberflächenabdeckungssegment (2a, 2a', 2a", 2b, 2b', 2b") geteilt ist, die benachbart zueinander positioniert sind und jeweils einen umlaufenden Rand (29) umfassen,
**dadurch gekennzeichnet, dass** das erste Oberflächenabdeckungssegment (2a, 2a', 2a") ferner eine erste Kippvorrichtung (21a, 21a', 21a") umfasst, wobei ein Gewicht der ersten Kippvorrichtung (21a, 21a', 21a") eine Ableitfläche (22a) des ersten Oberflächenabdeckungssegments (2a, 2a', 2a") von seinem umlaufenden Rand (29) zu einer ersten Ableitstelle (27a) des ersten Oberflächenabdeckungssegments (2a, 2a', 2a") nach unten kippt, wodurch Wasser von Niederschlag, der auf das erste Oberflächenabdeckungssegment (2a, 2a', 2a") fällt, durch Schwerkraft zur ersten Abtleitstelle (27a) fließt, wo es vom ersten Oberflächenabdeckungssegment (2a, 2a', 2a") abgeleitet werden kann,
dass das zweite Oberflächenabdeckungssegment (2b, 2b', 2b") ferner in ähnlicher Weise eine zweite Kippvorrichtung (21b, 21b', 21b") umfasst, wobei ein Gewicht der zweiten Kippvorrichtung (21b, 21b', 21b") eine Ableitfläche (22b) des zweiten Oberflächenabdeckungssegments (2b, 2b', 2b") von seinem umlaufenden Rand (29) zu einer zweiten Ableitstelle (27b) des zweiten Oberflächenabdeckungssegments (2b, 2b', 2b") nach unten kippt, wodurch Wasser von Niederschlag, der auf das zweite Oberflächenabdeckungssegment (2b, 2b', 2b") fällt, durch Schwerkraft zur zweiten Abtleitstelle (27b) fließt, wo es vom zweiten Oberflächenabdeckungssegment (2b, 2b', 2b") abgeleitet werden kann, und
wobei das Gewicht der Kippvorrichtung (21a, 21a', 21a", 21b, 21b', 21b") von einem jeweiligen umlaufenden Rand (29) zur jeweiligen Ableitstelle (27a, 27b) des ersten und/oder des zweiten Oberflächenabdeckungssegments (2a, 2a', 2a", 2b, 2b', 2b") zunimmt.

2. Wärmeenergiespeicheranlage (1, 1', 1") nach Anspruch 1, wobei die erste und/oder die zweiten Kippvorrichtung (21a, 21a', 21a", 21b, 21b', 21b") körnige Substanz umfasst bzw. umfassen oder daraus besteht bzw. bestehen oder im Wesentlichen daraus besteht bzw. bestehen.

3. Wärmeenergiespeicheranlage (1, 1', 1") nach einem der vorhergehenden Ansprüche, wobei eine Schichtdicke einer oder mehrerer der Kippvorrichtungen (21a, 21a', 21a", 21b, 21b', 21b") vom umlaufenden Rand (29) des jeweiligen Oberflächenabdeckungssegments (2a, 2a', 2a", 2b, 2b', 2b") zur jeweiligen Ableitstelle (27a, 27b) davon zunimmt.

4. Wärmeenergiespeicheranlage (1, 1', 1") nach einem der vorhergehenden Ansprüche, wobei zumindest das erste und/oder das zweite Oberflächenabdeckungssegment (2a, 2a', 2a", 2b, 2b', 2b") mindestens einen Kippvorrichtungsbehälter (26) zum Aufnehmen mindestens einer der ersten bzw. der zweiten Kippvorrichtung (21a, 21a', 21a", 21b, 21b', 21b") umfasst bzw. umfassen.

5. Wärmeenergiespeicheranlage (1, 1', 1") nach einem der vorhergehenden Ansprüche, wobei die Oberflächenabdeckung (2, 2', 2") eine der Speicherflüssigkeit (15) zugewandte, im Wesentlichen flüssigkeitsdichte und im Wesentlichen diffusionsdichte durchgehende untere Abdichtung (24), wobei die untere Abdichtung (24) die Oberseite (13) zumindest teilweise abdeckt, und eine im Wesentlichen diffusionsoffene obere Abdichtung (25) umfasst, wobei eine oder mehrere Schichten aus Isoliermaterial (23) zwischen der oberen und der unteren Abdichtung (24, 25) vorgesehen sind.

6. Wärmeenergiespeicheranlage (1, 1', 1") nach Anspruch 6, wobei die Oberflächenabdeckung (2, 2', 2") und die untere Abdichtung (24) im Wesentlichen die gesamte Oberseite (13) des Flüssigkeitsbehälters (11) abdecken.

7. Wärmeenergiespeicheranlage (1, 1', 1") nach Anspruch 5 oder 6, wobei die obere Abdichtung (25) durchgehend ist und im Wesentlichen die gesamte Oberseite (13) des Flüssigkeitsbehälters (11) abdeckt.

8. Wärmeenergiespeicheranlage (1, 1', 1") nach einem der vorhergehenden Ansprüche, wobei das erste der Oberflächenabdeckungssegmente (2a, 2a', 2a") ein Ableitsystem (3) umfasst, das von einem Ableitsystem (3) des zweiten der Oberflächenabdeckungssegmente (2b, 2b', 2b") getrennt ist, so dass Flüssigkeit auf einer Oberfläche jedes von und/oder in jedem von dem ersten und dem zweiten Abdeckungssegment (2a, 2a', 2a", 2b, 2b', 2b") an der ersten bzw. zweiten Ableitstelle (27a, 27b) individuell abgeleitet werden kann.

9. Wärmeenergiespeicheranlage (1, 1', 1") nach einem der vorhergehenden Ansprüche, wobei zumindest das erste und das zweite Oberflächenabdeckungssegment (2a, 2a', 2a", 2b, 2b', 2b") jeweils mindestens eine an der jeweiligen Ableitstelle (27a, 27b) davon befindliche Wanne (31) zum Sammeln von Flüssigkeit umfassen, die vom jeweiligen Oberflächenabdeckungssegment (2a, 2a', 2a", 2b, 2b', 2b") abgeleitet wird.

10. Wärmeenergiespeicheranlage (1, 1', 1") nach Anspruch 9, wobei die Wanne (31) sich unter der Oberseite (13) erstreckt und einen Flüssigkeitsextraktionspunkt (34) oder einen Flüssigkeitsauslass umfasst, der unter der Oberseite (13) positioniert ist.

11. Wärmeenergiespeicheranlage (1, 1', 1") nach einem der vorhergehenden Ansprüche, wobei eine im Wesentlichen fluiddichte und/oder im Wesentlichen flüssigkeitsdichte Barriere (33) zum Trennen eines Ableitsystems (3) des ersten Abdeckungssegments (2a, 2a', 2a") von einem Abdeckungssystem (3) des zweiten der Oberflächenabdeckungssegmente (2b, 2b', 2b") an der unteren Abdichtung (24) und/oder der oberen Abdichtung (25) angebracht ist, so dass Flüssigkeit auf einer Oberfläche von jedem und/oder in jedem von dem ersten und dem zweiten Abdeckungssegment (2a, 2a', 2a", 2b, 2b', 2b") an der ersten bzw. zweiten Ableitstelle (27a, 27b) unabhängig abgleitet werden kann.

12. Wärmeenergiespeicheranlage (1, 1', 1") nach einem der vorhergehenden Ansprüche, wobei die Oberflächenabdeckung (2a, 2a', 2a") zwei oder mehr Schichten aus Isoliermaterial (23) umfasst, und wobei die Schicht aus Isoliermaterial, die der Oberseite (13) am nächsten ist, eine höhere Dichte als die andere(n) Schicht(en) aus Isoliermaterial (23) aufweist.

13. Wärmeenergiespeicheranlage (1, 1', 1") nach einem der vorhergehenden Ansprüche, wobei die Oberflächenabdeckung (2, 2', 2") sich in einem Bereich von 100 bis 600 m in einer Längsrichtung (L) und in einem Bereich von 100 bis 600 m in einer Breitenrichtung (W) erstrecken kann.

14. Wärmeenergiespeicheranlage (1, 1', 1") nach einem der vorhergehenden Ansprüche, wobei ein Oberflächenabdeckungssegment (2a, 2a', 2a", 2b, 2b', 2b") sich in einem Bereich von 10 bis 100 m in einer Längsrichtung (L) und in einem Bereich von 10 bis 100 m in einer Breitenrichtung (W) erstreckt.

## Revendications

1. Installation de stockage d'énergie thermique (1, 1', 1") destinée à stocker l'énergie thermique provenant d'une source d'énergie, l'installation de stockage (1, 1', 1") comprenant :
un réservoir de liquide (11) destiné à être couplé à une source d'énergie et comprenant un volume de réservoir (12) avec un côté supérieur (13), ledit côté supérieur (13) coïncidant avec un niveau de liquide (14) d'un liquide de stockage d'énergie thermique (15) dans le réservoir de liquide (11), et
une couverture de surface (2, 2', 2") comprenant un matériau isolant (23), tel que du polystyrène extrudé (XPS), pour retenir l'énergie thermique stockée dans ledit liquide (15), ladite couverture de surface (2, 2', 2") recouvrant au moins partiellement ledit côté supérieur (13), ladite couverture de surface (2, 2', 2") étant divisée en au moins un premier et un deuxième segment de couverture de surface (2a, 2a', 2a", 2b, 2b', 2b") positionnés de manière adjacente l'un à l'autre et comprenant chacun une périphérie circonférentielle (29),
**caractérisé en ce que** le premier segment de couverture de surface (2a, 2a', 2a") comprend en outre un premier dispositif de basculement (21a, 21a', 21a"), un poids du premier dispositif de basculement (21a, 21a', 21a") faisant basculer une surface de drainage (22a) du premier segment de couverture de surface (2a, 2a', 2a") de sa périphérie circonférentielle (29) vers le bas en direction d'un premier emplacement de drainage (27a) du premier segment de couverture de surface (2a, 2a', 2a"), l'eau provenant des précipitations tombant sur le premier segment de couverture de surface (2a, 2a', 2a") s'écoulant par gravité vers le premier emplacement de drainage (27a) où elle peut être évacuée du premier segment de couverture de surface (2a, 2a', 2a"),
**en ce que** le deuxième segment de couverture de surface (2b, 2b', 2b") comprend également un deuxième dispositif de basculement (21b, 21b', 21b"), un poids du deuxième dispositif de basculement (21b, 21b', 21b") faisant basculer une surface de drainage (22b) du deuxième segment de couverture de surface (2b, 2b', 2b") de sa périphérie circonférentielle (29) vers le bas en direction d'un deuxième emplacement de drainage (27b) du deuxième segment de couverture de surface (2b, 2b', 2b"), l'eau provenant des précipitations tombant sur le deuxième segment de couverture de surface (2b, 2b', 2b") s'écoulant par gravité vers le deuxième emplacement de drainage (27b) où elle peut être évacuée du deuxième segment de couverture de surface (2b, 2b', 2b"), et
le poids du dispositif de basculement (21a, 21a', 21a", 21b, 21b', 21b") augmentant à partir d'une périphérie circonférentielle respective (29) vers l'emplacement de drainage respectif (27a, 27b) du premier et/ou du deuxième segment de couverture de surface (2a, 2a', 2a", 2b, 2b', 2b") .

2. Installation de stockage d'énergie thermique (1, 1', 1") selon la revendication 1, le premier et/ou le deuxième dispositif de basculement (21a, 21a', 21a", 21b, 21b', 21b") comprenant ou consistant, ou consistant sensiblement en une matière granulaire.

3. Installation de stockage d'énergie thermique (1, 1', 1") selon l'une quelconque des revendications précédentes, une épaisseur de couche d'un ou plusieurs des dispositifs de basculement (21a, 21a', 21a", 21b, 21b', 21b") augmentant à partir de la périphérie circonférentielle (29) du segment de couverture de surface respectif (2a, 2a', 2a", 2b, 2b', 2b") vers l'emplacement de drainage respectif (27a, 27b) de celui-ci .

4. Installation de stockage d'énergie thermique (1, 1', 1") selon l'une quelconque des revendications précédentes, au moins le premier et/ou le deuxième segment de couverture de surface (2a, 2a', 2a", 2b, 2b', 2b") comprenant au moins un contenant de dispositif de basculement (26) destiné à contenir au moins un des premier ou deuxième dispositifs de basculement (21a, 21a', 21a", 21b, 21b', 21b") respectivement.

5. Installation de stockage d'énergie thermique (1, 1', 1") selon l'une quelconque des revendications précédentes, le couverture de surface (2, 2', 2") comprenant un revêtement inférieur (24) continu sensiblement étanche au liquide et sensiblement étanche à la diffusion, destiné à faire face au liquide de stockage (15), le revêtement inférieur (24) recouvrant au moins partiellement ledit côté supérieur (13), et un revêtement supérieur (25) sensiblement ouvert à la diffusion, une ou plusieurs couches de matériau isolant (23) étant prévues entre le revêtement supérieur et le revêtement inférieur (24, 25).

6. Installation de stockage d'énergie thermique (1, 1', 1") selon la revendication 6, ladite couverture de surface (2, 2', 2") et ledit revêtement inférieur (24) recouvrant sensiblement toute la face supérieure (13) du réservoir de liquide (11).

7. Installation de stockage d'énergie thermique (1, 1', 1") selon la revendication 5 ou 6, le revêtement supérieur (25) étant continu et recouvrant sensiblement toute la face supérieure (13) du réservoir de liquide (11).

8. Installation de stockage d'énergie thermique (1, 1', 1") selon l'une quelconque des revendications précédentes, le premier des segments de couverture de surface (2a, 2a', 2a") comprenant un système de drainage (3), qui est isolé d'un système de drainage (3) du deuxième des segments de couverture de surface (2b, 2b', 2b"), de sorte que le liquide se trouvant sur une surface de chacun et/ou dans chacun desdits premier et deuxième segments de couverture (2a, 2a', 2a", 2b, 2b', 2b") peut être évacué individuellement au premier ou au deuxième emplacement de drainage (27a, 27b) respectivement.

9. Installation de stockage d'énergie thermique (1, 1', 1") selon l'une quelconque des revendications précédentes, au moins le premier et le deuxième segment de couverture de surface (2a, 2a', 2a", 2b, 2b', 2b") comprenant chacun au moins un puits (31) situé à leur emplacement de drainage respectif (27a, 27b), pour recueillir le liquide évacué du segment de couverture de surface respectif (2a, 2a', 2a", 2b, 2b', 2b").

10. Installation de stockage d'énergie thermique (1, 1', 1") selon la revendication 9, le puits (31) s'étendant sous la face supérieure (13) et comprenant un point d'extraction de liquide (34) ou une sortie de liquide positionnée sous la face supérieure (13).

11. Installation de stockage d'énergie thermique (1, 1', 1") selon l'une quelconque des revendications précédentes, une barrière sensiblement étanche aux fluides et/ou sensiblement étanche aux liquides (33) étant fixée au revêtement inférieur (24) et/ou à au revêtement supérieur (25), pour isoler un système de drainage (3) du premier segment de couverture (2a, 2a', 2a") d'un système de drainage (3) du deuxième des segments de couverture de surface (2b, 2b', 2b") de sorte que le liquide se trouvant sur une surface de chacun et/ou dans chacun desdits premier et deuxième segments de couverture (2a, 2a', 2a", 2b, 2b', 2b") peut être évacué individuellement au premier ou au deuxième emplacement de drainage (27a, 27b) respectivement.

12. Installation de stockage d'énergie thermique (1, 1', 1") selon l'une quelconque des revendications précédentes, la couverture de surface (2a, 2a', 2a") comprenant deux ou plus de deux couches de matériau isolant (23), et la couche de matériau isolant située le plus près de la face supérieure (13) étant d'une densité plus élevée que la ou les autres couches de matériau isolant (23).

13. Installation de stockage d'énergie thermique (1, 1', 1") selon l'une quelconque des revendications précédentes, la couverture de surface (2, 2', 2") pouvant s'étendre dans une plage de 100 à 600 m dans une direction de longueur (L) et dans une plage de 100 à 600 m dans une direction de largeur (W).

14. Installation de stockage d'énergie thermique (1, 1', 1") selon l'une quelconque des revendications précédentes, un segment de couverture de surface (2a, 2a', 2a", 2b, 2b', 2b") s'étendant dans une plage de 10 à 100 m dans une direction de longueur (L) et dans une plage de 10 à 100 m dans une direction de largeur (W).
